# EUROPEAN PATENT SPECIFICATION

(11) **EP 1 970 112 B1**
(45) Date of publication and mention of the grant of the patent: **06.03.2019**
(21) Application number: 07121255.9
(22) Date of filing: 22.11.2007
(51) Int. Cl.: B01D 35/02, B01D 35/06, B01D 35/147

(54) **SELF-CLEANING FILTER FOR PRESSURE VESSELS, PARTICULARLY FOR LIQUEFIED GAS CONTAINERS**
SELBSTREINIGENDER FILTER FÜR DRUCKBEHÄLTER, INSBESONDERE FÜR FLÜSSIGGASBEHÄLTER
FILTRE AUTONETTOYANT POUR RÉCIPIENTS SOUS PRESSION, PARTICULIÈREMENT POUR CONTENEURS À GAZ LIQUÉFIÉ

(30) Priority: 22.12.2006 IT PD20060469
(43) Date of publication of application: 17.09.2008
(73) Proprietor: Cavagna Group S.p.A., 25010 Ponte S. Marco di Calcinato (Prov. of Brescia) (IT)
(72) Inventor: CAVAGNA, Ezio, 25065 LUMEZZANE (BS) (IT)
(74) Representative: Susanetto, Carlo

(56) References cited:
- US-A- 3 468 420
- US-A- 3 817 380
- US-A1- 2006 102 534
- US-B1- 6 423 215

## Description

The present invention relates to a self-cleaning filter for pressure vessels, particularly for liquefied gas containers.

In the technical field of pressure vessels, such as liquefied gas containers in particular, it has been found necessary to protect the gas-using devices from possible malfunctions caused by impurities and contamination of various kinds present in the container. Such containers, generally in the form of cylinders, frequently contain ferrous oxides, dust and other particles which may become suspended in the delivered fluid and, if not suitably treated by appropriate filtering, may damage the using devices.

US 3 817 380 A discloses a strainer for removing foreign particles from a pressurized fluid, said strainer comprising: a casing having an inlet port and an outlet port therein; a cylindrical filter element movable between a first and a second position within said casing, said filter element moving from the first position to the second position in response to the pressure of the fluid adjacent the inlet port when said filter element is clogged with foreign particles, a spring for biasing said filter element toward the first position and magnetic means for collecting ferromagnetic particles carried by the pressurized fluid are disposed within said filter element.

A major drawback of the filtering systems normally in use is the progressive loss of filtering capacity or decrease in flow rate at the exit from the filter, due essentially to the progressive clogging of the filter surfaces by the waste and impurities deposited thereon during use. The remedy proposed up to the present time is appropriate maintenance of the filters with periodic replacement of the filter surface.

However, this is a rather inconvenient and burdensome process, and must be carried out solely by specialist personnel.

The problem at the basis of the present invention is that of providing a self-cleaning filter which is structurally and functionally designed to overcome the aforementioned drawback in a substantially automatic way.

In the context of this problem, one object of the invention is to provide a filter in which any maintenance operations are purely occasional and potentially unnecessary.

Another object of the invention is to provide a filter which can maintain a substantially unchanged filtering efficiency and useful flow rate over a period of time.

This problem is resolved and these objects are achieved with a filter made in accordance with the following claims.

The characteristics and advantages of the invention will be made clearer by the detailed description of a preferred but non-exclusive example of embodiment thereof, illustrated, for the purposes of guidance and without restrictive intent, with reference to the attached drawings, in which:
- Fig. A is a schematic view in longitudinal section of a pressure vessel in which a filter according to the invention is fitted, shown during the delivery of the liquefied gas contained in it;
- Fig. B is a view corresponding to that of Figure A, shown during the filling of the container.

In the figures, the number 1 schematically indicates a portion of a pressure vessel for liquefied gas, in which a filter 2 according to the invention is fitted. The container and filter are shown on different scales for convenience of depiction.

A pipe 3 for the passage of the liquefied gas extends into the container 1, from a delivery and filling valve, which is not shown since it is of a known type, to the filter 2. The pipe 3 acts as a supply pipe during the filling of the container 1 and as a delivery pipe during the delivery of the liquefied gas to the appliances supplied by it through the delivery valve.

The filter 2 comprises a body 2a in which is formed a filter chamber 4 whose inner wall is essentially cylindrical with a circular section. The chamber 4 communicates with the pipe 3 and with the inside of the container 1 through a corresponding first and second port, identified as 5 and 6 respectively.

In the chamber 4 there is mounted a tubular cylindrical filter element 7, having one axial end closed by a base 7a and an axially opposed end which is open, the edge of the latter forming a plug 9 which, in combination with a valve seat 10 formed in the first port 5, creates a normally closed by-pass valve means, whose operation is explained below.

The shell of the filter element 7 forms a first filter surface 11 which serves to retain the smallest impurities during the delivery of gas from the container 1. A second filter surface 12, which is less fine - in the sense that it can retain only particles of larger diameter than those retained by the surface 11 - is formed by a pre-filter 13 mounted in the second port 6.

A spring 14 acts between the pre-filter 13 and the filter element 7 to press the plug 9 against the seat 10 in order to shut the latter off.

One or more sets of permanent magnets 15, alternating with spacers 16 if necessary, are positioned behind the chamber 4 and outside it, to act as retaining means for temporarily retaining against the walls of the chamber 4 impurities having ferromagnetic properties, such as small particles of oxide ferrous in suspension in the liquefied gas while the gas is passing into the chamber during delivery.

In a preferred arrangement, three sets of magnets and spacers are positioned along the circumference of the body 2a at intervals of 120°. Alternatively, the permanent magnet may be positioned in the centre of the chamber 4 and the filter element may be positioned around it.

As a further alternative, the retaining means can be made to comprise a shape of the chamber 4 such that the residues are deposited on the walls by centrifugal force. This effect is provided, for example, by making the chamber in the shape of a cyclone scroll.

The operation of the filter 2 is as follows.

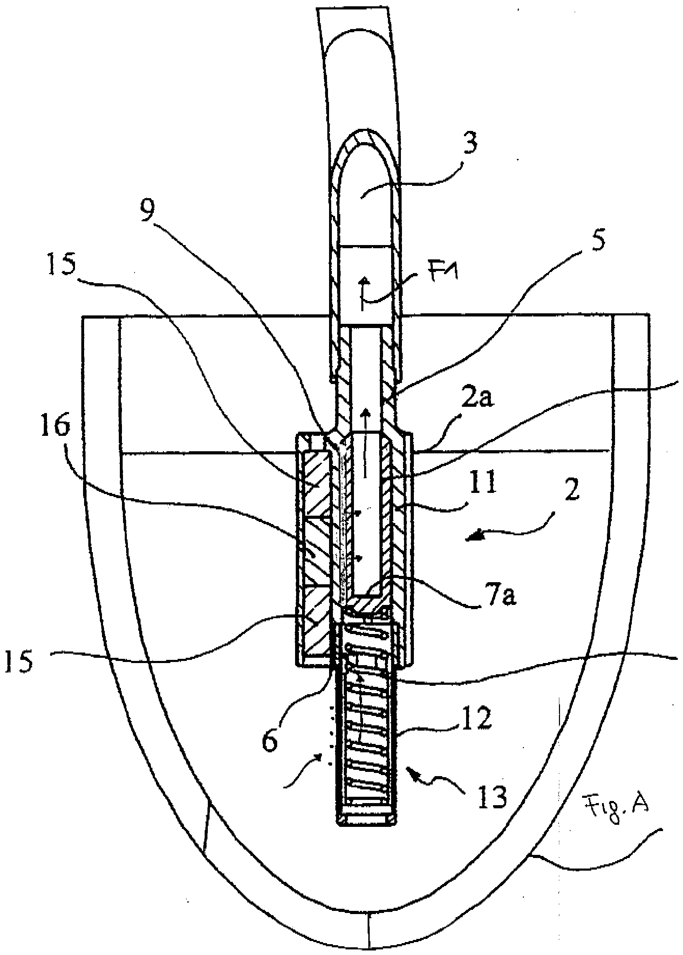

With reference to Figure 1, when the container is in the state of delivering the liquefied gas contained in it, the filter 2 is in the position shown in Figure 1.

In this condition, the liquefied gas undergoes a coarse filtration, intended to retain the coarser impurities, in the pre-filter 13, the plug 9 is pressed by the spring 14 against the seat 10, and the delivered gas is passed into the chamber 4 between the walls of this chamber and the filter element 7.

In passing close to the walls of the chamber 4, any ferromagnetic waste is attracted by the magnets 15 and retained against the walls. On the other hand, minute suspended particles are retained by the first filter surface 11. All the delivered gas is forced to pass through the filter surface 11, since the by-pass valve means are closed.

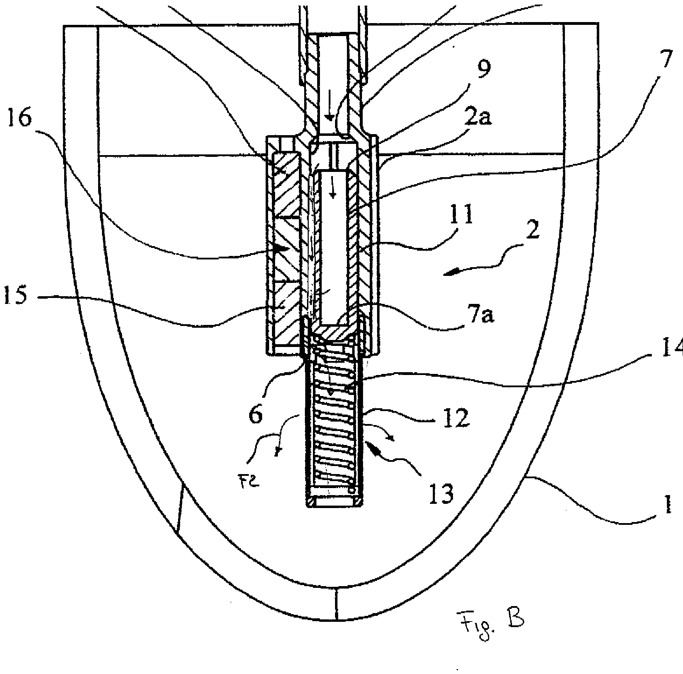

When the container 1 is refilled, liquid gas under high pressure is passed in through the pipe 3, and the filter changes to the position shown in Figure 2. In this condition, the pressure of the liquefied gas overcomes the pressure exerted on the filter element 7 by the spring 14 and by the gas present in the container, thus causing the element 7 to move in opposition to the spring 14 and consequently opening the by-pass valve means. The liquefied gas therefore enters the chamber 4 at a high velocity, creating a flushing action on the filter surface 11 and on the walls of the chamber 4, and removing any coarser waste retained by the pre-filter 13. All the removed impurities are deposited on the base of the container.

Because of this design, the filter 2 is automatically flushed in counter flow on each filling cycle of the container 1, thus preventing the clogging or even the partial clogging of the filter surfaces and maintaining the optimal flow rate for which the filter is designed. The invention as described in the above description may be modified and varied without departing from the same inventive principle. For example, the body of the filter can be made either from ferromagnetic or from non-magnetic material, the filter element and/or the pre-filter can be made either from plastics material or from other materials, including, in particular, the use of sintered or porous materials for the filter element to be used for filtering. It is also envisaged that a plurality of filter stages may be provided, both for the pre-filter and for the first filter surface.

The invention thus achieves the proposed objects while also offering numerous advantages, including:
- reduction of the maintenance operations on the filter
- reduction of the down time caused by stopping the user devices for the purposes of maintenance
- versatility of use of the device, because of its reduced overall dimensions.

## Claims

1. Self-cleaning filter for pressure vessels, particularly for liquefied gas containers (1), **characterized in that** it comprises:
- a filter chamber (4) communicating with a pipe (3) for the passage of liquefied gas and with the inside of the container (1) through first (5) and second (6) ports,
- a tubular cylindrical filter element (7) mounted in said chamber (4) and having one axial end closed by a base (7a) and an axially opposed open end, wherein the shell of said filter element (7) forms a first filter surface (11) for retaining the smallest impurities during the delivery of gas from the container (1), said first filter surface (11) being positioned in said chamber and being such that the gas delivered from the container (1) through the said chamber and directed towards said pipe passes through said filter surface (11) after flowing over the walls of the said chamber, wherein the edge of said open end forms a plug (9),
- a valve seat (10) formed in the first port (5), wherein said plug (9) in combination with said valve seat (10) creates by-pass valve means for by-passing the first filter surface, for bringing liquefied gas from the pipe into the container during the filling of the latter, without passing the gas through the first filter surface,
- a spring (14) acting between a pre-filter (13) mounted in the second port (6) and the filter element (7) to press the plug (9) against the seat (10) in order to shut the latter off; whereby, when said by-pass valve means are shut off, the gas delivered into the container to the chamber is forced to pass through the filter surface (11), while, when during the filling of the container (11) said by-pass valve means are open in said chamber, they allow for by-passing the first filter surface (11) and bringing liquefied gas from the pipe (3) into the filter chamber (4), in such a way that the liquefied gas brought in to fill the container through said by-pass valve means causes flushing of the walls of said chamber (4) and of said first filter surface, and
- retaining means (15) in said chamber for temporarily retaining suspended impurities in the liquefied gas against the walls of said chamber during delivery, and for releasing them when flushing takes place during the filling of the container.

2. Filter according to Claim 1, in which the retaining means comprise at least one permanent magnet (15) associated with the walls of the said chamber for retaining the said impurities by magnetic attraction.

3. Filter according to Claim 1 or 2, in which a second filter surface (12) is formed by the pre-filter (13) and is provided between the said chamber and the container, so that during delivery the liquefied gas is filtered by the second filter surface (12) before entering said chamber.

4. Filter according to Claim 3, in which the second filter surface is less fine than the first filter surface (11).

5. Filter according to one or more of the preceding claims, in which the walls of the said chamber are made from ferromagnetic material.

6. Filter according to one or more of the preceding claims, in which the retaining means comprise a shape of the chamber (4) such that the residues are deposited on the walls by centrifugal action, the chamber (4) being in the shape of a cyclone scroll.

7. Filter according to Claim 6 in which the filter element (7) is movable to open/close the by-pass valve means, wherein said filter element (7) is pushed resiliently with the said plug (9) to close and open the valve seat (10) at the outlet of the said pipe (3) in the said chamber (4).

8. Filter according to Claim 1, in which the retaining means comprise at least one permanent magnet (15) that is positioned centrally in said chamber and is surrounded by said first filter surface.

9. Filter according to one or more of Claims 7 to 8 in which the resilient pressure on the said plug (9) is generated by the difference between the pressures upstream and downstream of the said valve means.

10. Pressure container (1) for liquefied gases, including a valve for delivery and for filling the container, from which a pipe (3) for the passage of the liquefied gas extends towards the inside of the container, **characterized in that** it comprises a filter (2) according to one or more of the preceding claims, mounted in the said container at the end of the said pipe opposite the said valve.

## Patentansprüche

1. Selbstreinigender Filter für Druckbehälter, insbesondere für Flüssiggas-Behälter (1), **dadurch gekennzeichnet, dass** er aufweist:
- eine Filterkammer (4), die mit einer Leitung (3) für den Durchgang von Flüssiggas und mit dem Inneren des Behälters (1) durch erste (5) und zweite (6) Anschlüsse in Verbindung steht,
- ein rohrförmiges zylindrisches Filterelement (7), das in der Kammer (4) montiert ist, und ein axiales Ende, das durch eine Basis (7a) geschlossen wird, und ein axiales gegenüberliegendes offenes Ende aufweist, wobei die Hülle des Filterelements (7) eine erste Filterfläche (11) zum Halten kleinster Verunreinigungen während der Abgabe von Gas aus dem Behälter (1) bildet, wobei die erste Filterfläche(11) in der Kammer positioniert ist, und so beschaffen ist, dass das Gas, das aus dem Behälter (1) durch die Kammer zugeführt und zur Leitung geleitet wird, durch die Filterfläche (11) nach dem Strömen über die Wände der Kammer hindurchgeht, wobei der Rand des offenen Endes einen Stopfen (9) bildet,
- einen Ventilsitz (10), der im ersten Anschluss (5) ausgebildet ist, wobei der Stopfen (9) in Kombination mit dem Ventilsitz (10) eine Bypassventileinrichtung zum Umgehen der ersten Filterfläche erzeugt, um Flüssiggas aus der Leitung in den Behälter während des Füllens des Letzteren zu liefern, ohne das Gas durch die erste Filterfläche hindurchgeht,
- eine Feder (14), die zwischen einem im zweiten Anschluss (6) montierten Vorfilter (13) und dem Filterelement (7) wirkt, um den Stopfen (9) gegen den Sitz (10) zu drücken, um diesen zu sperren; wobei, wenn die Bypassventileinrichtung gesperrt ist, das Gas, das vom Behälter der Kammer zugeführt wird, durch die Filterfläche (11) hindurchgehen muß, während, wenn während des Füllens des Behälters (11) die Bypassventileinrichtungen in der Kammer offen sind, sie ein Umgehen der ersten Filterfläche (11) und ein Liefern von Flüssiggas aus der Leitung (3) in die Filterkammer (4) in der Weise ermöglichen, dass das Flüssiggas, das geliefert wird, um den Behälter durch die Bypassventileinrichtung zu füllen, ein Spülen der Wände der Kammer (4) und der ersten Filterfläche bewirkt, und
- eine Halteeinrichtung (15) in der Kammer zum vorübergehenden Halten von ausgeschiedenen Verunreinigungen im Flüssiggas an den Wänden der Kammer während der Zuführung und zu deren Freigabe, wenn ein Spülen während des Füllens des Behälters stattfindet.

2. Filter nach Anspruch 1, in dem die Halteeinrichtung mindestens einen Permanentmagneten (15), der mit den Wänden der Kammer verbunden ist, zum Halten der Verunreinigungen durch magnetische Anziehung aufweist.

3. Filter nach Anspruch 1 oder 2, in dem eine zweite Filterfläche (12) durch den Vorfilter (13) gebildet wird und zwischen der Kammer und dem Behälter vorgesehen ist, so dass während der Zuführung das Flüssiggas durch die zweite Filterfläche (12) vor dem Eintreten in die Kammer gefiltert wird.

4. Filter nach Anspruch 3, in dem die zweite Filterfläche weniger fein als die erste Filterfläche (11) ist.

5. Filter nach einem oder mehreren der vorhergehenden Ansprüche, in dem die Wände der Kammer aus ferromagnetischem Material hergestellt sind.

6. Filter nach einem oder mehreren der vorhergehenden Ansprüche, in dem die Halteeinrichtung eine Form der Kammer (4) aufweist, so dass die Rückstände auf den Wänden durch die Zentrifugalwirkung abgeschieden werden, wobei sich die Kammer (4) in der Form einer Zyklonrolle befindet.

7. Filter nach Anspruch 2, in dem das Filterelement (7) beweglich ist, um die Bypassventileinrichtung zu öffnen/schließen, wobei das Filterelement (7) mit dem Stopfen (9) zum Schließen und Öffnen des Ventilsitzes (10) am Auslass der Leitung (3) in die Kammer (4) elastisch gedrückt wird.

8. Filter nach Anspruch 1, in dem die Halteeinrichtung mindestens einen Permanentmagneten (15) aufweist, der zentral in der Kammer positioniert und von der ersten Filterfläche umgeben ist.

9. Filter nach einem oder mehreren der Ansprüche 7 bis 8, in dem der elastische Druck auf den Stopfen (9) durch die Differenz zwischen den beiden stromaufwärts und stromabwärts auftretenden Drücken der Ventileinrichtung erzeugt wird.

10. Druckbehälter (1) für Flüssiggase mit einem Ventil zum Zuführen und Füllen des Behälters, von dem sich eine Leitung (3) für den Durchgang des Flüssiggases zur Innenseite des Behälters erstreckt, **dadurch gekennzeichnet, dass** er einen Filter (2) gemäß einem oder mehreren der vorhergehenden Ansprüche aufweist, der im Behälter am Ende der Leitung gegenüber dem Ventil montiert ist.

## Revendications

1. Filtre autonettoyant pour des récipients sous pression, particulièrement pour des conteneurs à gaz liquéfié (1), **caractérisé en ce qu'**il comprend :
- une chambre de filtre (4) communiquant avec un tuyau (3) pour le passage de gaz liquéfié et avec l'intérieur du conteneur (1) au travers de premier (5) et second (6) orifices,
- un élément de filtre cylindrique tubulaire (7) monté dans ladite chambre (4) et présentant une extrémité axiale fermée par une base (7a) et une extrémité ouverte opposée axialement, dans lequel la coque dudit élément de filtre (7) forme une première surface de filtre (11) pour retenir les impuretés les plus petites pendant la livraison du gaz du conteneur (1), ladite première surface de filtre (11) étant positionnée dans ladite chambre et étant telle que le gaz livré du conteneur (1) au travers de ladite chambre et dirigé vers ledit tuyau passe au travers de ladite surface de filtre (11) après l'écoulement sur les parois de ladite chambre, dans lequel l'arête de ladite extrémité ouverte forme un bouchon (9),
- un siège de valve (10) formé dans le premier orifice (5), dans lequel ledit bouchon (9) en combinaison avec ledit siège de valve (10) crée des moyens de valve de dérivation pour dériver la première surface de filtre, pour amener le gaz liquéfié du tuyau à l'intérieur du conteneur pendant le remplissage de ce dernier, sans faire passer le gaz au travers de la première surface de filtre,
- un ressort (14) agissant entre un préfiltre (13) monté dans le second orifice (6) et l'élément de filtre (7) pour presser le bouchon (9) contre le siège (10) afin de fermer ce dernier ; moyennant quoi, lorsque lesdits moyens de valve de dérivation sont fermés, le gaz livré dans le conteneur vers la chambre est forcé à passer au travers de la surface de filtre (11), alors que, lorsque pendant le remplissage du conteneur (11) lesdits moyens de valve de dérivation sont ouverts dans ladite chambre, ils permettent de dériver la première surface de filtre (11) et d'amener le gaz liquéfié du tuyau (3) à l'intérieur de la chambre de filtre (4) de telle manière que le gaz liquéfié amené pour remplir le conteneur au travers desdits moyens de valve de dérivation entraîne le rinçage des parois de ladite chambre (4) et de ladite première surface de filtre, et
- des moyens de retenue (15) dans ladite chambre pour retenir temporairement les impuretés suspendues dans le gaz liquéfié contre les parois de ladite chambre pendant la livraison, et pour libérer celles-ci lorsque le rinçage a lieu pendant le remplissage du conteneur.

2. Filtre selon la revendication 1, dans lequel les moyens de retenue comprennent au moins un aimant permanent (15) associé aux parois de ladite chambre pour retenir lesdites impuretés par attraction magnétique.

3. Filtre selon la revendication 1 ou 2, dans lequel une seconde surface de filtre (12) est formée par le préfiltre (13) et est prévue entre ladite chambre et le conteneur de sorte que pendant la livraison le gaz liquéfié soit filtré par la seconde surface de filtre (12) avant d'entrer dans ladite chambre.

4. Filtre selon la revendication 3, dans lequel la seconde surface de filtre est moins fine que la première surface de filtre (11).

5. Filtre selon l'une ou plusieurs des revendications précédentes, dans lequel les parois de ladite chambre sont fabriquées en un matériau ferromagnétique.

6. Filtre selon l'une ou plusieurs des revendications précédentes, dans lequel les moyens de retenue comprennent une forme de la chambre (4) telle que les résidus sont déposés sur les parois par action centrifuge, la chambre (4) étant sous la forme d'une volute de cyclone.

7. Filtre selon la revendication 6, dans lequel l'élément de filtre (7) est mobile pour ouvrir/fermer les moyens de valve de dérivation, dans lequel ledit élément de filtre (7) est poussé de manière élastique avec ledit bouchon (9) pour fermer et ouvrir le siège de valve (10) à la sortie dudit tuyau (3) dans ladite chambre (4).

8. Filtre selon la revendication 1, dans lequel les moyens de retenue comprennent au moins un aimant permanent (15) qui est positionné de manière centrale dans ladite chambre et est entouré par ladite première surface de filtre.

9. Filtre selon l'une ou plusieurs des revendications 7 à 8, dans lequel la pression élastique sur ledit bouchon (9) est générée par la différence entre les pressions en amont et en aval desdits moyens de valve.

10. Conteneur sous pression (1) pour des gaz liquéfiés, incluant une valve pour la livraison et pour remplir le conteneur, de laquelle un tuyau (3) pour le passage du gaz liquéfié s'étend vers l'intérieur du conteneur, **caractérisé en ce qu'**il comprend un filtre (2) selon l'une ou plusieurs des revendications précédentes, monté dans ledit conteneur à l'extrémité dudit tuyau opposée à ladite valve.
